Europäisches Patentamt

European Patent Office

Office européen des brevets

(11) Publication number: **0 265 701**
**A2**

## (12) EUROPEAN PATENT APPLICATION

(21) Application number: 87114340.0

(22) Date of filing: 01.10.87

(51) Int. Cl.⁴: **G01B 11/14** , **G01B 11/02**

(30) Priority: 29.10.86 IT 2216886

(43) Date of publication of application:
**04.05.88 Bulletin 88/18**

(84) Designated Contracting States:
**DE FR**

(71) Applicant: **PIRELLI ACCESSORI INDUSTRIALI S.p.A.**
**Piazzale Cadorna, 5**
**I-20123 Milan(IT)**

(72) Inventor: **Forghieri, Antonio**
**Largo Olgiata 15**
**I-00123 Roma(IT)**

(74) Representative: **Mariani, Giorgio, Dr. et al**
**INDUSTRIE PIRELLI S.p.A. Direzione Brevetti**
**Piazzale Cadorna, 5**
**I-20123 Milano(IT)**

(54) **Optical sensor for measuring the distance between two elements.**

(57) Optical sensor for measuring the distance between two reciprocally mobile elements (1-2, 11-12), along a fixed rectilineal direction of movement. The sensor comprises at least one photo-sensitive element (4-14) that receives an amount of light radiated by at least one light-source (3-13) proportional to the distance $\underline{d}$ between these two elements, and an electric circuit apt for generating an electric signal that is representative of said distance.

EP 0 265 701 A2

## OPTICAL SENSOR FOR MEASURING THE DISTANCE BETWEEN TWO ELEMENTS

The present invention regards an optical sensor that is apt for measuring the distance between two reciprocally mobile elements along a prefixed rectilineal shifting direction. The two mobile elements can be generic, mechanical parts of an apparatus, a machine, or suchlike, and, in particular, the plates of an air-spring, or a pneumatic suspension, destined for being used in motor-cars.

The sensors, in their relative position between the two mechanical parts, must generally satisfy the requisites of sensibility, stability through the passage of time, resistance to wearing out, and reliability in functioning at a low cost.

The sensors of the known type, based upon diverse working principles, do not allow for obtaining the above-indicated characteristics but rather, a compromise between them.

Therefore, the aim of this invention is to realize an optical sensor that is capable of providing a precise and reliable indication of the distance between two mechanical elements and which results, at the same time, as being resistant in structure, low costing and practically insensible to wearing out and to any other interferences originating from the external ambient, such as the presence of disturbances of the electric, or magnetic type, etc., or, due to the presence of forces that tend to alter the relative position of the two elements, even according to unforeseen directions.

The invention consists of an optical sensor, for measuring the distance between two reciprocally mobile elements, along a fixed rectilineal direction of movement, characterized by the fact of comprising the combination of:

-at least a first light-source mounted upon one of the said elements, and oriented parallelly to the said direction of movement;

-at least a photo-sensitive component mounted so as to receive the light emitted by the light-source;

-an electric circuit, connected to said photo-sensitive element, for producing upon its exiting, an electric signal proportional to the intensity of the light radiated on the photo-sensitive element.

According to one form of realization for the invention, said light-source is a light emitting diode (LED), and the photo-sensitive component is a light resistor.

In one application, the two relative mobile elements are the two plates of a pneumatic suspension for autovehicles and, in this case, the sensor is connected to an electric circuit that is apt for generating opportune signals for keeping the preestablished distance between the two plates and hence, a pre-fixed level of the suspensions.

Said light-source and said photo-sensitve elements can be mounted upon opposite plates, or else, upon the same plate foresees, in this case, a reflecting device.

The invention will now be described in some forms that are realizable and applicable, with referring to the FIGURES in the attached drawings, where:

FIG. 1 -schematically illustrates the main functioning of the optical sensor according to the invention;

FIG. 2 -illustrates the application of a sensor, according to the invention, when the level of the pneumatic suspension is being monitored;

FIG. 3 -is a section along the line III-III of FIG. 2;

FIG. 4 -illustrates a wiring diagram of the control circuit utilizable with the device of FIGS. 2 and 3;

FIG. 5 -shows an alternative variation of the optical sensor of the invention; and

FIGS. 6, 7 and 8 -illustrate two further variations of realization, relative to the structure and to the positioning of the photo-sensitive components.

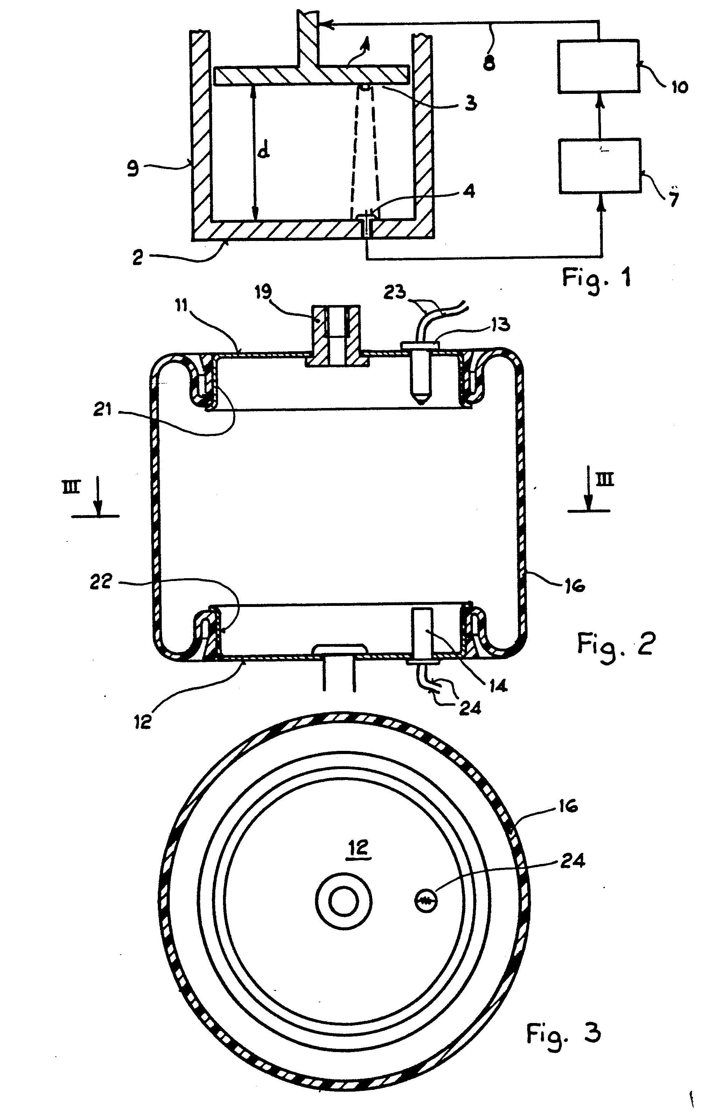

FIG. 1 schematically illustrates a structure formed by two reciprocally mobile elements, drawn with a piston (1) that is axially slidable in a cylinder (9) hence, that is in particular, mobile with respect to the cylinder's base (2). In many applications, the distance $d$ between the two elements (1 and 2), must be maintained at a pre-established value even in the presence of the external forces tending to vary this distance. The invention shall be described with particular reference to this usage of the sensor which however, is not its sole use.

According to the invention means are foreseen for measuring, in a precise and reliable way, the distance in-between two elements and in particular, hence, between the two facing surfaces of said elements. From the information thus obtained, it becomes possible, according to one application of the invention, to maintain the reciprocal position, of the two elements (1 and 2), constant, (by acting upon just one of the elements, or else, eventually upon both).

The sensor of the invention, foresees a light-source (3) mounted upon one of said elements, and at least one photo-sensitive component (4) positioned so as to receive a fraction of the light emitted by the light-source, which results as being proportional to the distance $d$ between the two elements (1,2). In the main diagram shown in FIG. 1, the light-source is positioned on one of the elements, and the photo-sensitive component positioned on the other element. However, as will result clear from the realizative examples, illustrated successively, this fact has not to be taken in any limited sense.

The photo-sensitive component (4) is connected to a circuit which is apt for producing an electric signal proportional to the intensity of the light radiated on the photo-sensitive element itself, and this "generator" circuit is, in its turn, connected to a control circuit that is capable of monitoring actuator devices (10) that, through the connection (8), determine a variation in the distance between the elements (1 and 2) by, for example, materially shifting the element (1). The two electric circuits are - schematically joined in the block (7) because they are often realized physically, as in a single circuit.

Referring now to FIGS. 2, 3 and 4, there will now be illustrated one form realization of the invention, that is actually preferred, which is applied to the monitor for controlling the level of pneumatic suspensions in motorcars.

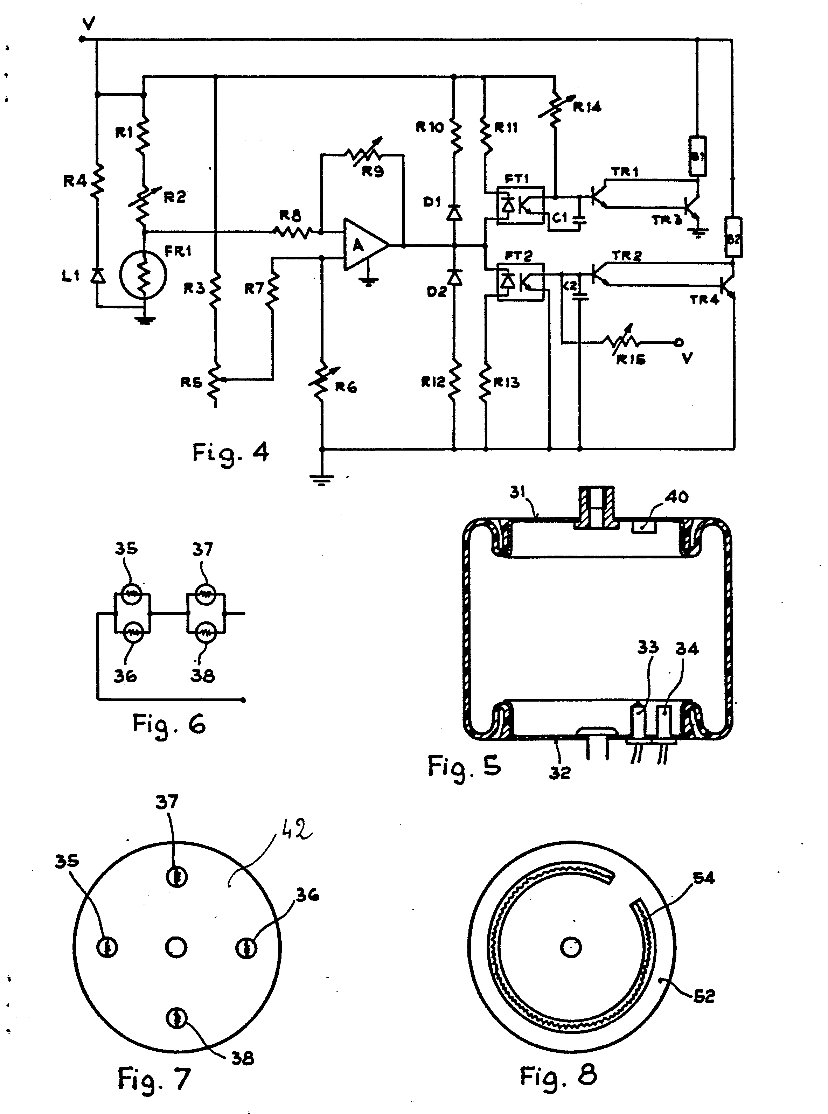

The pneumatic suspension comprises an airspring, formed by a cylindrical volume, defined by two plates (11 and 2), and provided with circular flanges (21 and 22) and by a cylindrical surface (16) made of elastomeric material, opportunely fixed to the flanges (21 and 22) and apt for maintaining a pressurized fluid (usually air), confined in the thus-defined space. A conduit (19) is foreseen, that permits, thanks to the already-known means (hence not shown in FIG. 3), for introducing, or for discharging the pressurized fluid for in this manner, varying the distance between the two elements (11 and 12) which form the suspension plates.

Upon one of the plates (indicated with 11, in FIG. 2) there is mounted a light-source (13) formed, for example, by a light emitting diode (LED) that is alimented through the terminals (23). On the opposite face of the plate (12) there is mounted a photo-sensitive component (14) for example, a light resistor, whose terminations (24) are taken to the outside of the suspension and connected to the electric circuit generator to be described further on in this text.

The light-source (13) is provided, preferably, by means which are apt for focusing the light emitted that, for simplicity sake, have not been pointed out in the FIGURES, since they are of the already-known type. For example, by using a light emitting diode (LED), .these means are generally incorporated in the container for the component comprising a transparent lenticular structure in correspondence of the surface, for emittting the light.

It is obvious that, for said light-source, other components of the known type, suited for emitting an electro-magnetic radiation, can also be utilized eventually also beyond the band of the visible wave lengths, that are capable of influencing the electric characteristics of a photo-sensitive component that can also be diverse to that of a photo-resistor as for example, a photo-transistor, a photo-diode etc. It is obvious that, upon varying the type of source, and/or the type of photo-sensitive component, it will be necessary to also connect these components to opportunely modified circuits.

The intensity of the luminous light that radiates on the photo-sensitive component (14) depends upon the surface of the latter, upon its position, and moreover, on the distance between the two surfaces 11 and 12. In particular, once all the constructive parameters are fixed, the intensity of the luminous light will result inversely proportional to the distance squared ($d^2$). The photo-sensitive component (14) will produce, in the generator circuit wherein it is inserted, an electrical quantity (voltage, current) that depends upon the said intensity of light.

In the instance of the specific example given, by using a photo-resistor, the generator circuit comprises a resistive network, alimented by a constant voltage, wherein a photo-resistor is inserted, so much so that the variation in the resistance value of the component determined by the illumination, will produce a corresponding variation in the voltage, present across the circuit of the photo-resistor itself. This voltage opportunely amplified and compared in the control circuit, will be utilize .for producing a signal apt for taking the two elements to the pre-established distance when this should be varied due to external causes. As an alternative, said photo-resistor could also be connected to the base of a transistor in such a manner that the pilot current is a function of the resistance value, or else, with even following still other configurations.

Apart from the economical results had, the usage of a photo-resistor as a photo-sensitive component allows for rendering the response of the sensor to be more linear, since the variation, in the resistance of the photo-resistor, follows approximately a quadratic type of curve that is complementary with respect to the attenuation curve of the luminosity of the light-source as a function of the distance.

In this manner, it is possible to obtain an electrical signal linearly proportional to the distance between the two surfaces of the suspension without the use of any moving parts and with a high precision, that is capable of discriminating variations of distance, in the order of millimeters.

For preferance, and as seen in the FIGURES, the photo-sensible components and the light-source are mounted in such a way as to face each other and in an annular position with taking into account both, the construction of the suspension as well as with obviating any interferences occurring on the part of the pressurized fluid passing through conduit (19).

In FIG. 4 there is illustrated the diagram of a suitable electric circuit made to function with the device shown in FIGS. 2 and 3. In it, the L1 light emitting diode (LED) corresponding to the diode (13), is lighted through a voltage source V and through a polarization resistance R4, and it determines, as a function of the distance between the plates, a variation of the value of ohmic resistance of the component FRI corresponding to photo-resistor (14) of FIG 2. This latter is connected in series, to a fixed resistance R1 and to a variable resistance of regulation R2 also alimented by the voltage V, so much so that the voltage present across the circuit of FRI and applied through the resistance R8 and an amplifier-comparator A, results proportional to the said ohmic value of the photo-resistor.

At the comparison entry of the amplifier A, there is applied a reference voltage obtained, always from the voltage V, through the resistive network as formed by R3, R5, R6 and R7, where R5 and R6 are variable for allowing the necessary calibrations. This reference-voltage defines the distance which is required to be maintained between the two plates, since the amplifier exit is null and hence, it does not cause any intervention when the two inputted voltages are equal.

The amplifier A is retroactioned, in a controllable manner through the variable resistance R9 in such a way as to render it stable, and it generates on exiting, a voltage that results proportional, both in intensity as well as in sign, to the difference between the voltage across the photo-sensitive component and the reference voltage i.e. a voltage that is in proportion to the variation, in the distance between the elements (11, 12), with respect to the pre-established value d.

The circuit illustrated till now (without the components R4, L1 and FR1), forms the circuit generator of the electric signal that is proportional to the distance between the plates (11 and 12). The remaining part of FIG. 4 shows the control circuit which is connected to the actuator means shown in the diagrams B1 and B2.

Depending on the sign of this tension, there is activated the (LED) diode of the optoelectronic coupler FT1, or of the optoelectronic coupler FT2, which causes the current to circulate in the incorporated photo-transistor that, by means of the resistance R14, or R15 as the case may be, determines the load of the condenser C1, or else C2. When the condenser concerned has reached a tension sufficient for priming the conduction of the corresponding transistor (TRI or else TR2), it causes the conduction of the corresponding incorporated power transistor (TR3, or TR4 respectively, incorporated in the previous ones in the Darlington configuration), to thus open the solenoid load valve, shown schematically by the component B1 ; or else, to open up the solenoid discharge valve shown schematically by the component B2.

In the first case, pressurized air is emitted through the conduit 19 with increasing the distance existing between the two elements (11 and 12); while in the second case, pressurized air is caused to be discharged for, in this way, approaching the two elements (11 and 12). Obviously, the solenoid valve B1 will be activated when the distance in-between the elements is reduced (and hence, the intensity is increased of the luminous radiation striking upon the photo-sensitive component), and vice-versa. The variable resistors R14 and R15, together with the condensers C1, C2, provide the necessary lags in the intervention of the solenoid valves for so eliminating such phenomena as instability, and/or sensitivity, in the event of spurious signals, etc.

With reference to FIG. 5, there is schematically shown a further form of realization whereby the light-source (33) and the photo-sensitive component (34) are disposed on the same element (32); while, on the element (31) there is mounted a device, or reflecting component (40).

The latter can be a simple specular surface, or otherwise, a specular and focalizing surface, or some other suchlike component.

The chief advantage of this form of realization consists in being able to dispose all the terminations, of the circuital components, upon the same side (as can be seen in FIG. 5), with having simplifications in the wiring harness and with the possibility of exploiting a greater distance, for evaluating the movement. In compensation, the device needs a slightly more complex setting-up, above all for obviating the effects of spurious reflections.

Another form that can be realizated, is illustrated with reference to the schematic FIGS. 6 and 7 and this comprises four photo-sensitive components, in particular, photo-resistors (35, 36, 37, 38), equidistributed annularly, upon the element (42).

FIG. 6 shows how these photo-resistors are connected to parallel pairs and how these thus-obtained pairs are connected in series to one another, so as to form (electrically) a single photo-sensitive element in correspondence of the element FR1 in the circuit of FIG. 4 where the resulting resistance variation proves to be uneffected by any eventual disalignments, between the light-source and photo-sensitive components, seeing that it is interposed on diverse points of the plate (42).

Obviously, other configurations with discrete elements, are also possible and even other realizable forms such as that shown schematically in FIG. 8, where the photo-sensible component is a flat photo-resistor having an annular form, that entends for almost the entire circumference of the element (52), on which it is applied and which results as being alimented by one or more (LED) diodes disposed annularly and opposite one another, or else, preferably, by a single (LED) diode with a similar construction to that of the photo-sensitive component i.e. extending along the annular surface.

The applications of the sensor, according to the invention, are described with particular reference to its usage as a zero-gauger i.e. for determining the shifting aside with respect to a pre-established distance rather than to the true and proper distance between two elements. Nevertheless it is quite obvious that said sensor does effectively measure the distance in-between two elements. In fact, a signal which is in proportion to the said distance, can be obtained by the photo-sensible component for example, the tension across the circuit of the photo-resistor.

A gauging of the distance can also be obtained by calibrating the rheostat R5 with a scale that furnishes the measurement of the distance d, as a function of the position of the rheostat cursor, to which corresponds a zero output of the amplifier A.

## Claims

1. Optical sensor, for measuring the distance between two reciprocally mobile elements (1,2) along a fixed rectilineal direction of movement, characterized by the fact of comprising the combination of:
   -at least a first light-source (3) mounted upon one of the said elements, and oriented parallelly to the said direction of movement;
   -at least a photo-sensitive component (4) mounted so as to receive the light emitted by the light-source;
   -an electric circuit connected to said photo-sensitive element, for producing upon its exiting, an electric signal proportional to the intensity of the light radiated on the photo-sensitive element.

2. Optical sensor, according to CLAIM 1, characterized by the fact that the said elements comprise two flat facing surfaces (11-12) with the possibility of movement along a direction perpendicular to the flat surfaces, upon which there are respectively mounted the light-source (13) and the photo-sensitive component (14).

3. Optical sensor, according to CLAIM 1, characterized by the fact that said elements comprise two flat facing surfaces (31-32), with the possibility of movement along a direction perpendicular to the flat surfaces, with the light source (33) and the photo-sensitive component (34) being mounted upon one of the said surfaces (32), whereas a reflecting device (40) is foreseen on the other surface.

4. Optical sensor, according to CLAIM 2 or CLAIM 3, characterized by the fact that the two surfaces are circular, and that both, the light-source as well as the photo-sensitive component are extended according to annular facing portions that correspond with the two flat surfaces.

5. Optical sensor, according to CLAIM 4, characterized by the fact of comprising a single localized light-source and a single localized photo-sensible element.

6. Optical sensor, according to CLAIM 4, characterized by the fact of comprising at least one light-source, and a plurality of single photo-sensitive components (35-36, 37-38) that are equidistanced annularly.

7. Optical sensor, according to CLAIM 6, characterized by the fact that said photo-sensitive components (35-36, 37-38) are connected in series and parallelly to one another.

8. Optical sensor, according to CLAIMS 4, 5 or 6, characterized by the fact that the said light-sources are formed by (LED) diodes and that the said photo-sensitive components are photo-resistors.

0 265 701

Fig. 1

Fig. 2

Fig. 3

8611

II - II

Fig. 4

Fig. 6

Fig. 5

Fig. 7

Fig. 8